# EUROPEAN PATENT SPECIFICATION

(11) **EP 1 873 037 B1**
(45) Date of publication and mention of the grant of the patent: **28.12.2011**
(21) Application number: 07017953.6
(22) Date of filing: 03.05.2007
(51) Int. Cl.: B61D 15/06, B61D 17/10, B61G 11/16, F16F 7/12

(54) **Collision energy absorbing device and railway vehicle having the device**
Vorrichtung zur Absorption von Kollisionsenergie und Schienenfahrzeug mit der Vorrichtung
Dispositif d'absorption d'énergie de collision et véhicule ferroviaire comportant ce dispositif

(30) Priority: 10.05.2006 JP 2006131978; 10.05.2006 JP 2006131979; 10.05.2006 JP 2006131980; 25.12.2006 JP 2006348382; 31.01.2007 JP 2007021270; 31.01.2007 JP 2007021271
(43) Date of publication of application: 02.01.2008
(62) Divisional of application: 07251860.8
(73) Proprietor: Hitachi, Ltd., Chiyoda-ku Tokyo 100-8280 (JP)
(72) Inventor: Mochida, Toshihiko c/o Hitachi, Ltd., IP Group, Tokyo 100-8220 (JP); Miyamoto, Toshiharu c/o Hitachi, Ltd., IP Group, Tokyo 100-8220 (JP); Yamaguchi, Takashi c/o Hitachi, Ltd., IP Group, Tokyo 100-8220 (JP)
(74) Representative: Paget, Hugh Charles Edward

(56) References cited:
- EP-A- 0 581 707
- EP-A- 0 802 100
- EP-A- 1 215 098
- EP-A- 1 223 095
- WO-A-2006/024059
- DE-U1- 29 722 844

## Description

### Field of the Invention

The present invention relates to an impact energy absorbing device applied to a railway vehicle such as a railroad car or a monorail car in particular and provided for the purpose of reducing an impact received at the time of collision against an obstacle and to a railway vehicle having the impact energy absorbing device.

### Description of the Related Art

During running of a railway vehicle typified by a railroad car, there is a possibility of collision against an unexpected object. For example, in railroad car collision instances in the past, unexpected colliding objects include large objects such as road vehicles, trees and railroad cars, small objects such as stones, snow masses, parts of cars running in the opposite direction, and other various kinds of object.

A case where a railroad car collides against a large object will be considered. When a railroad car collides against a large object, a large impact acts on the railroad car by collision against the object. As an idea for protecting a train crew and passengers on a railroad car from such an impact, the idea of absorbing the energy of impact by positively deforming a portion of the structure of a railroad car exists. It is the idea of separately providing, in the structure of a railroad car, a space in which a train crew and passengers ride on, and which is provided to prevent the structure from being collapsed at the time of collision against an object (hereinafter referred to as "survival zone") and a space for positively deforming the structure of the railroad car to absorb the energy of impact at the time of collision against an object (hereinafter referred to as "crushable zone").

A case where a railroad car collides against a small object, e.g., a case where a stone, a snow mass, a part of a vehicle running in the opposite direction or the like upflung by wind caused by running of the train in the opposite direction collides against the front surface of a car front-end portion will next be considered. In a case where a vehicle collides against such a small flying object, no substantially large impact acts on the vehicle body since the vehicle has a mass overwhelmingly larger than that of the flying object. However, there is a possibility of the flying object piercing through a vehicle structure to injure a driver or a passenger. Regarding collision against a small flying object, therefore, not an energy-absorbing structure such as that described above but a strong structure is provided at the vehicle end at which the driver rides on, thereby preventing intrusion of the flying object. A shielding plate disposed to prevent intrusion of a flying object into the driver's cab in order to save the driver's life will be referred to as a flying object shielding plate.

The body of a railroad car is constituted by an underframe, two side structures, a roof structure and two end structures. Inner beams and side beams are mounted on the underframe to enable the body to have high rigidity. Wiring and piping are secured to lower portion of the underframe. With respect to a group of railway vehicles or railroad cars forming a train in particular, there is a need to consider collision between the train cars in the event of collision of the train, since the plurality of cars are connected to each other to form the train. The underframe of a railroad train is strongly made. Therefore, when bodies of the cars in the train are collided one against another by collision of the car positioned at the front or rear end of the train (the car at each end referred to as "front-end car", hereinafter), the underframes of the cars collide one against another. The underframes are so strong as not to collapse even when they collide one against another and are, therefore, ineffective in reducing the impact.

Railroad trains have therefore been proposed in which an impact energy absorbing device is provided not only on the front-end car but also between each adjacent pair of the cars connected to each other in the train. The impact energy absorbing device is a device in which buckling is caused to absorb impact energy and to thereby reduce the influence of the impact on passengers. A railroad car construction has been proposed in which an impact energy absorbing device of the above-described kind is provided on a front-end portion of the front-end car, and in which impact energy produced at the time of collision is absorbed by a deformation of the device (Japanese Patent Laid-Open No. 7-186951). This impact energy absorbing device (relief device) is constituted by an element having a triangular shape in a plane perpendicular to the direction of action of impactive force, honeycomb panel and other members. A plurality of the above-described relief devices are disposed in parallel to the direction of action of impactive force and disposed one after another along the direction of action of impactive force.

The applicant of the present invention proposed a railway vehicle having an impact relief mechanism which absorbs an impact by buckling at the time of collision (Japanese Patent No. 3725043). The impact relief mechanism is formed of a double-skin hollow shape, i.e., a combination of two parallel plate members connected to each other by a truss and having the shape of a tube rectangular as viewed in section, and has a predetermined length in the axial direction.

Further, the applicant of the present invention proposed an arrangement in which, at least in the underframe of the above-described railway vehicle, the material of members forming opposite ends in the longitudinal direction of the vehicle is soft relative to the material of members closer to a center of the underframe in the longitudinal direction. In this railway vehicle, the influence of impact on a train crew and passengers is reduced as effectively as possible to improve safety even in the event of an unexpected vehicle collision accident or the like.

The applicant of the present invention also paid attention to the fact that the rigidity of corner portions of the impact absorbing structure in the form of a rectangular tube is excessively high in comparison with the other portions, and provided an improved structure such that no truss is provided in the vicinity of the ridge line at each corner portion of the rectangular tubular shape of the impact absorbing structure. The applicant of the present invention then proposed a method of improving the impact absorbing characteristics by reducing the rigidity of the corner portions of the impact absorbing structure in comparison with that of the other portions so that a peak load at the time of collision is reduced (Japanese Patent Laid-Open No. 2005-75255).

The applicant of the present invention also proposed an impact absorbing structure formed by joining four plate members by welding or the like and having the shape of a rectangular tube such as that described above (Japanese Patent Laid-Open No. 2005-75256). In the impact absorbing structure, a plurality of reinforcing plate members are fixed in the space inside the rectangular tube by welding at intervals in the longitudinal direction. The impact absorbing structure buckles to absorb an impact. When the impact absorbing structure in the form of a rectangular tube buckles to absorb an impact, the reinforcing plate members prevent buckling accompanied with excessive deformation to improve the energy absorbing characteristics.

The applicant of the present invention further proposed an impact absorbing structure having the shape of a tube rectangular as viewed in section and formed by connecting four hollow shapes made of an aluminum alloy by welding or the like using the same additional material so that portions of the hollow shapes corresponding to corners are joined to each other (Japanese Patent Laid-Open No. 2005-75293). In each hollow shape, the outer plate and the inner plate are connected to each other by a truss. Since both the hollow shapes and the welded portions are formed of the aluminum alloy, different portions of the structure are uniformly compression-deformed, thus improving the impact absorbing characteristics.

The applicant of the present invention further proposed a railway vehicle in which members along the vehicle longitudinal direction are joined to each other by friction stir welding at least in the underframe to make finer the metallographic structure of portions under friction stir processing so that the energy absorption value of the corresponding portions is increased, and to thereby improve the characteristics of impact absorption at the welded portions considered to be weak in resistance to impact energy (Japanese Patent No. 3725057).

In an impact energy absorbing device and a railway vehicle having the impact energy absorbing device, the product of a deformation (strain) and a force (stress) produced by collision of the impact energy absorbing device corresponds to absorbed energy (work). If all impact energy absorbing devices start deforming in union at the time of collision, a large impactive force is produced and an increased pressure-collapse peak load results. A large pressure-collapse peak load causes a large impact on a train crew and passengers in the case of application of a railway vehicle in particular, which is undesirable. There is, therefore, a subject to reduce the pressure-collapse peak load by slightly shifting the times at which a plurality of energy absorbing members constituting an impact energy absorbing device start deforming respectively at the time of collision.

There is also a problem that if an energy absorbing member constituting an impact energy absorbing device is elongated, full buckling, i.e., bucking by bending of an intermediate portion as a result of application of an impactive load at the time of collision, can occur easily in the energy absorbing member. When full buckling occurs in the energy absorbing member, energy is not sufficiently absorbed. In the case of application to a railway vehicle such as a railroad car in particular, application of a large impact on a train crew and passengers is permitted, which is undesirable. There is, therefore, a subject to sufficiently absorb energy by preventing total buckling of an energy absorbing member at the time of collision and by causing pressure collapse of the energy absorbing member with stability and efficiency.

WO-2006/024059 shows a crumple element for a railway vehicle having a collapsible profiled part, located between two end plates and having the shape of a tubular case, for dissipating impact energy. The crumple element includes a guiding element which is parallel to the longitudinal direction of the profiled part and is fixed to the end plate facing away from the vehicle. The other end plate has a hole through which the guiding element can slide, even if inclined to the longitudinal direction.

### SUMMARY OF THE INVENTION

An object of the present invention is to provide a railway vehicle capable of avoiding coincidence between pressure collapse start times in an impact energy absorbing device at the time of collision to reduce the pressure-collapse peak load and to thereby reduce the intensity of impact. In particular, the present invention aims to provide an impact energy absorbing device capable of reducing loads on the vehicle body, passengers and so on in the case of application to transportation apparatus such as a railway vehicle, and a railway vehicle having the impact energy absorbing device.

Another object of the present invention is to provide an impact energy absorbing device capable of preventing total buckling of an energy absorbing member constituting the impact energy absorbing device at the time of collision and causing pressure collapse of the energy absorbing member with stability and efficiency, particularly an impact energy absorbing device capable of reducing loads on passengers and a train crew or on a vehicle body in the case of application to a railway vehicle such as a railroad car, and a railway vehicle having the impact energy absorbing device.

To achieve the above-described objects, according to the present invention, there is provided a railway vehicle having an impact energy absorbing device, as set out in claim 1.

When the energy absorbing member pressure collapses due to an impact, the buckling preventing member provided in the energy absorbing member ensures that the energy absorbing member can pressure-collapses by fine buckling with stability and efficiency while avoiding full buckling. Thus, the impact energy absorbing device can sufficiently absorb impact energy to reduce the impact received by the railway vehicle at the time of collision.

In embodiments of the present invention is arranged as described below, the times at which the plurality of energy absorbing members constituting the impact energy absorbing device start pressure collapsing in the event of collision do not coincide with each other; the energy absorbing members start pressure collapsing with differences in time. Therefore, the pressure collapse peak load in the entire impact energy absorbing device is reduced, thereby reducing the intensity of impact. In the case of application to a railway vehicle such as a railroad car in particular, loads on the vehicle body, passengers and so on can be reduced.

Further, the arrangement of the present invention uses the buckling preventing member disposed in the energy absorbing member constituting the impact energy absorbing device to ensure avoidance of full buckling at the time of collision and to enable the energy absorbing member to pressure-collapse through its entire length in the longitudinal direction with stability and efficiency to sufficiently absorb impact energy, thus reducing the impact received in the event of collision. In particular, in a railway vehicle such as a railroad car to which the impact energy absorbing device is applied, the present invention makes it possible to reduce loads on the vehicle body, passengers and so on due to impacts received in the event of collision.

### BRIEF DESCRIPTION OF THE DRAWINGS

FIG. 1 is a front view of an end portion of an intermediate vehicle representing a first embodiment of a railway vehicle according to the present invention;
FIG. 2 is a sectional side view of the end portion of the intermediate vehicle shown in FIG. 1, taken along line B-B in FIG. 1;
FIG. 3 is a sectional view of an impact energy absorbing device used in the end portion of the intermediate vehicle shown in FIG. 1, taken along line A-A in FIG. 1;
FIG. 4 is a diagram showing another energy absorbing member not embodying the invention;
FIG. 5 is a diagram showing still another energy absorbing member not embodying the invention;
FIG. 6 is a diagram showing a further example of the energy absorbing member embodying the invention;
FIG. 7 is a diagram showing an example of a combination of a buckling preventing member and a joint plate used in an energy absorbing member embodying the invention;
FIG. 8 is a bottom sectional view of a front-side right half of a front-end vehicle representing a second embodiment of the railway vehicle according to the present invention, taken along line Y-Y in FIG. 9;
FIG. 9 is a longitudinal sectional view of the front-end vehicle shown in FIG. 8, taken along line Z-Z in FIG. 8;
FIG. 10 is a transverse sectional view of a portion of the front-end vehicle shown in FIG. 8, taken along line X-X in FIG. 8;
FIG. 11 is a front view of an example of the energy absorbing member;
FIG. 12 is a sectional view showing an example of state in which the energy absorbing is pressure-collapsed;
FIG. 13 is a graph showing an example of changes in load with respect to the displacement in the impact energy absorbing device at the time of energy absorption according to the present invention;
FIG. 14 is a front view of an end portion of an intermediate vehicle to which the present invention may be applied;
FIG. 15 is a side view of the end portion of the intermediate vehicle shown in FIG. 14;
FIG. 16 is a schematic plan view of the end structure shown in FIG. 16;
FIG. 17 is a graph showing absorption load in the end structure shown in FIG. 16;
FIG. 18 is a diagram showing placement in comparative example 1;
FIG. 19 is a graph showing absorption load in comparative example 1 shown in FIG. 18;
FIG. 20 is a diagram showing placement in comparative example 2; and
FIG. 21 is a graph showing absorption load in comparative example 2 shown in FIG. 20.

### DETAILED DESCRIPTION OF THE PREFERRED EMBODIMENTS

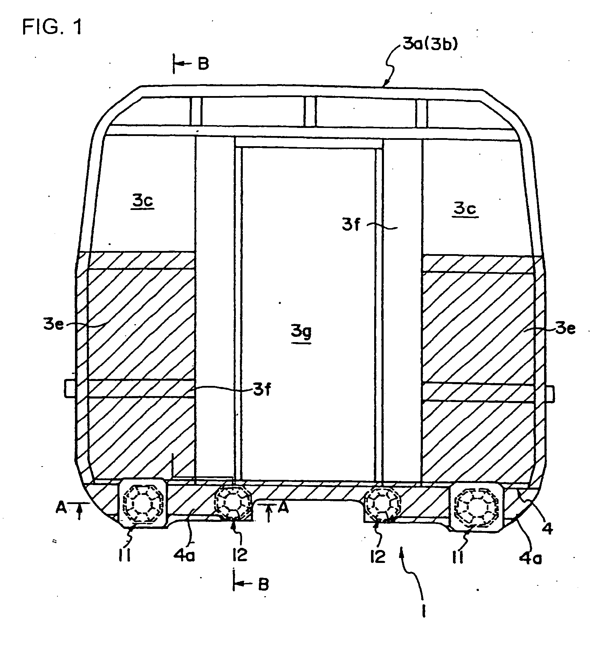

FIGS. 1 to 3, 6 and 7 show, as a first embodiment of the present invention, an example of an impact energy absorbing device in accordance with the present invention and an intermediate vehicle which is a railway vehicle to which the impact energy absorbing device is applied. With respect to the intermediate vehicle, and end structure in which the impact energy absorbing device is mounted with illustrated.

The impact energy absorbing device according to the present invention can be used not only in end portions of a front-end railroad car but also in end portions of intermediate cars in a train. The train is formed of the front-end cars at the leading and trailing ends and a required number of intermediate cars. For example, in a case where the front-end car ("front-end car" also denoting the rear-end car as occasion demands) collides against an obstacle or another car for example, collisions occur successively between the front-end car and the intermediate car adjacent to the front end car and between the adjacent pairs of the other intermediate cars. If the impact energy absorbing device is used in each of the end portions of the front-end and intermediate cars, an impact caused by a collision on any of the cars in the train or secondary impacts caused between the intermediate cars can be absorbed by the impact energy absorbing devices.

The embodiment shown in FIGS. 1 to 3 is an impact energy absorbing device 1 used in a car end structure 3a of the front-end car closer to the intermediate cars and car end structures 3b of the intermediate cars. In some cases, in the car end structures (3b in particular), a driver's seat 3d is provided in spaces 3c provided on opposite sides of a through passage 3g for car-to-car transfer for a train arrangement purpose. For the formation of the driver spaces 3c, frames 3f are disposed so as to surround the spaces 3c. A flying object shielding plate 3e (hatched portions) is provided at the front sides of the driver spaces 3c to protect a train crew member from a flying object such as a pebble. The shielding plate 3e is formed by connecting left and right main plate portions by a lower side portion. In the lower side portion, there are formed holes 3i and 3j through which energy absorbing members 11 and 12 are passed. The car end structures 3a and 3b have substantially the same function as a conventional end structure. The car end structures 3a and 3b are attached to conventional end structures of the car body by suitable fixing means such as welding. A floor surface 3h of the car end structure 3a is substantially flush with a floor surface 4b on an underframe 4 as seen from the car interior side, forming a continuous structure.

In this example, the impact energy absorbing device 1 has a pair of larger energy absorbing members 11 mounted in an end plate 4a of the underframe 4 of the car body respectively in outer positions in the car body width direction, and a pair of smaller energy absorbing members 12 mounted in the end plate 4a respectively in positions closer to a center in the car body width direction by being spaced apart from each other in the car body width direction. Each of the energy absorbing members 11 and 12 is disposed so that its longitudinal direction, i.e., its extension direction, coincides with the longitudinal direction of the entire car body. Front ends of the energy absorbing members 11 and 12 are placed at the body outermost side in the longitudinal direction of the entire car body. Base ends of the energy absorbing members 11 and 12 are assumed to be positions closer to the center of the car in the longitudinal direction. Further, the energy absorbing members 11 and 12 are disposed by being arranged in a direction intersecting the longitudinal direction of the car. That is, the energy absorbing members 11 and 12 are disposed abreast generally in parallel with each other by being arranged in the car width direction. More specifically, the energy absorbing members 11 and 12 are disposed by adjusting their centers to positions equal to each other in height among the car bodies and bilaterally symmetric with each other in the car width direction. The front ends of the energy absorbing members 11 and 12 are respectively covered with end plates 11a and 12a, and end plates 11b and 12b provided on the base ends of the energy absorbing members 11 and 12 are fixed on the end plates 4a of the underframe 4 by fixing members 13 such as bolts and nuts, thus mounting the energy absorbing members 11 and 12 on the car body (underframe 4). The fixing members 13 may be fastening means in any other form and welding may alternatively be performed. The energy absorbing members 11 and 12 are not limited to the illustrated larger and smaller ones. It is apparent that the energy absorbing members 11 and 12 may be of the same type; the inner and outer positions in the car width direction at which the smaller and larger ones are respectively placed may be reversed; or a combination of a larger number of energy absorbing members of various types may be provided.

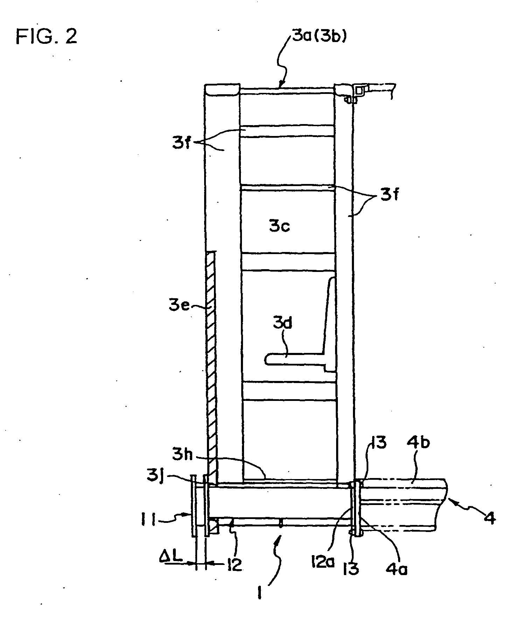

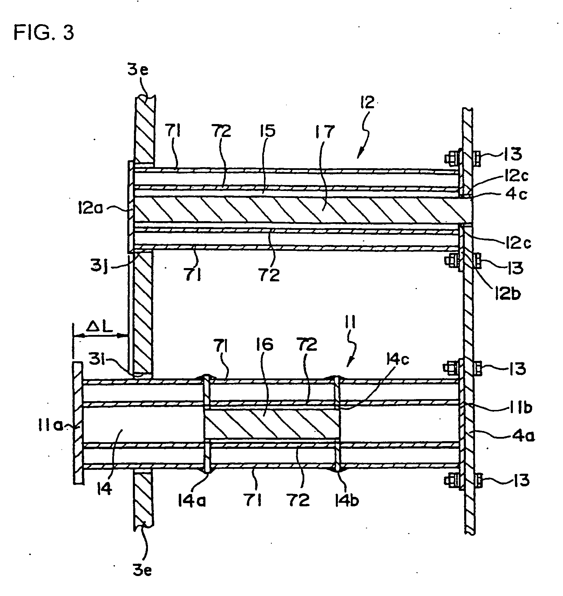

In the embodiment shown in FIG. 3, the larger energy absorbing members 11 have a size larger in diameter and in length than that of the smaller energy absorbing members 12. The smaller energy absorbing members 12 have such a length that their front ends occupy substantially the same position as the end of car body (the end surfaces of the flying object shielding plates 3e) when the smaller energy absorbing members 12 are mounted on the end plate 4a of the underframe 4. On the other hand, the larger energy absorbing members 11 is constructed so as to be longer than the smaller energy absorbing members 12 by a length ΔL. When the energy absorbing members 11 and 12 are mounted on the end plate 4a of the underframe 4, they are disposed as shown in FIG. 2 in a state of being superposed one on another and as shown side by side in FIG. 3. The larger energy absorbing members 11 protrude forward beyond the end of the car body through a small distance (e.g., about 100 mm). When a large impactive force is applied to the underframe 4 by collision, the underframe 4 can resist the load since the strength of the underframe 4 is high as described above. Thus, the pressure-collapse-direction front ends of the plurality of energy absorbing members are set at different positions in the longitudinal direction of the railway vehicle, although it is not necessarily required that the position of each front end differ from any of the positions of the other front ends.

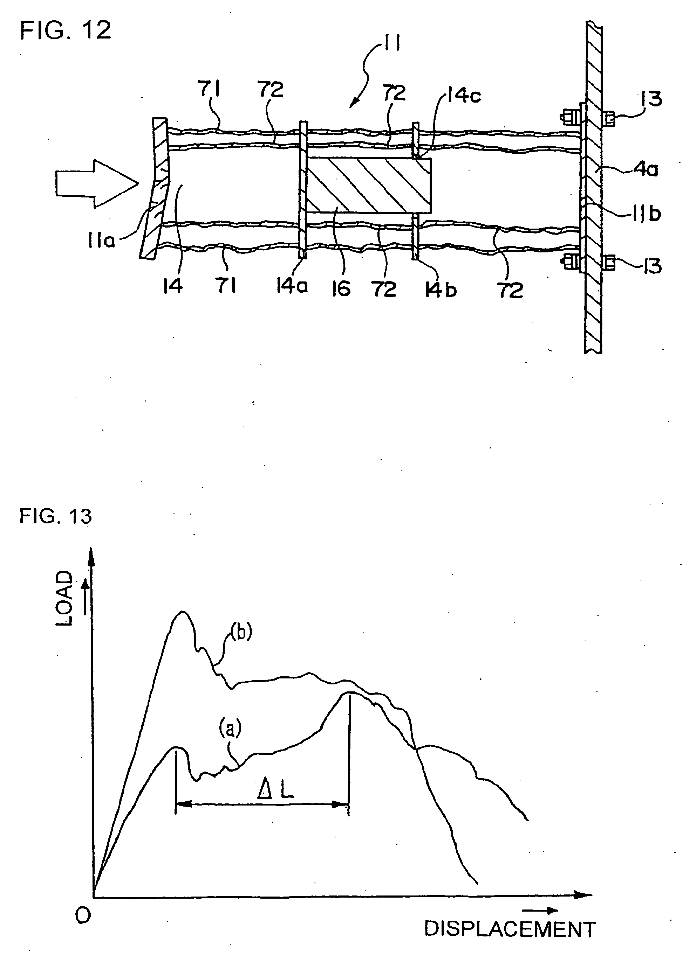

At the time of collision, therefore, an impactive force produced by collision is transmitted among the cars and, if the impact energy absorbing devices 1 are provided so as to face each other in each adjacent pair of the car end structures 3a and 3b of the cars, the impact energy absorbing devices 1 operate. The larger energy absorbing members 11 first collide against each other and start collapsing between each adjacent pair of cars due to the difference (ΔL) between the front end positions of the energy absorbing members 11 and 12 provided on each car. Thereafter, with a small time delay, the smaller energy absorbing members 12 collide against each other and start collapsing. Pressure collapse of the energy absorbing members 11 and 12 will be described. FIG. 12 shows an example of pressure collapse of the energy absorbing members 11 shown in FIG. 3. The attitudes of the cars at the time of occurrence of collision are not strictly the same, depending on whether the rails are straight or curved. With respect to collision between each adjacent pair of cars, however, it may be assumed that the cars collide against each other generally along the longitudinal directions of the cars. In such a situation, the energy absorbing members 11 and 12 are broken in such a manner as to collapse generally straight while keeping alignment of their axes, with recurrence of small buckling of the tubular bodies constituting the absorbing members 11 and 12. The state after pressure collapse is, for example, a contracted bellows-like structure. That is, the energy absorbing members 11 and 12 deform not by bending the whole into generally straight halves having a certain angle therebetween, i.e., full bucking, but in such a manner as to exhibit a bellows-like structure, thus sufficiently absorbing impact energy.

A peak load through each impact energy absorbing device 1 is dispersed by a small difference in collapse start time between the two types of energy absorbing members 11 and 12. Thus, peak loads through the impact energy absorbing devices 1 are reduced to reduce loads on the car bodies, passengers and so on. FIG. 13 is a graph showing dispersion of peak loads. In the conventional energy absorbing member arrangement, although a plurality of energy absorbing members are provided, the front ends of the energy absorbing members are aligned with each other, so that the energy absorbing members start collapsing simultaneously with each other, resulting in occurrence of a considerably high peak load in an initial stage of pressure collapse, as shown in FIG. 13 (see graph curb b). In contrast, in this embodiment of the present invention, a time difference in peak load generation time is produced by a difference in pressure collapse start time according to the difference ΔL between the positions of the front end portions resulting from the difference between the lengths of the two energy absorbing members 11 and 12. The result is that the load through the energy absorbing members 11 operating earlier exhibits a peak and then decreases temporarily and, thereafter, the load through the energy absorbing members 12 operating subsequently exhibits a peak. In this embodiment, the height of the peak load as a whole can be reduced (see graph curve a) in comparison with the case where the two energy absorbing members 11 and 12 operate at a time simultaneously with each other.

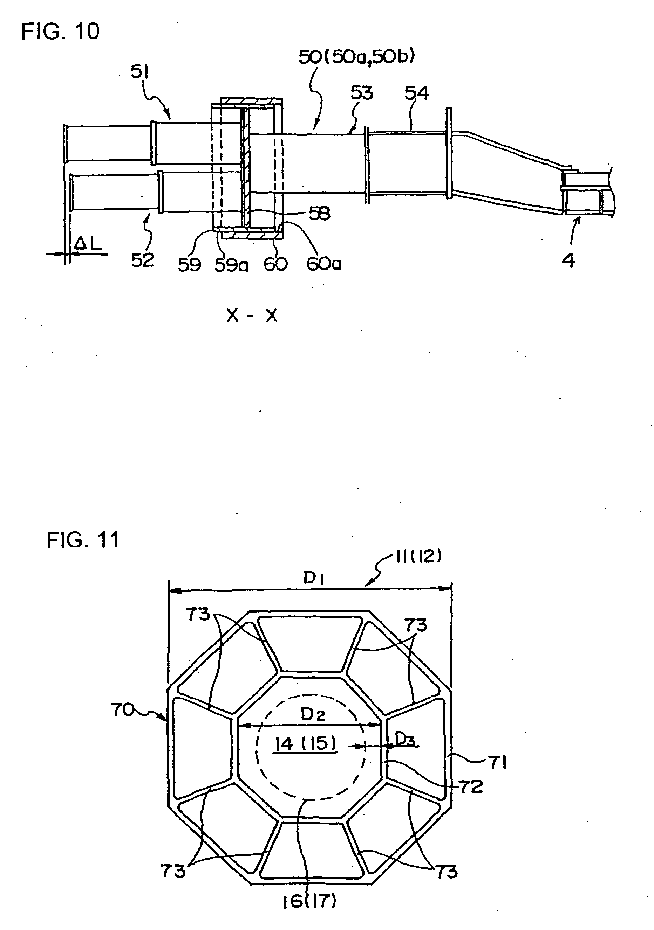

In the illustrated example, the energy absorbing members 11 and 12 have internal structures similar in shape to each other while differing in sectional size. The energy absorbing member 11 (12) constituting one kind of impact energy absorbing device 1 will be described with reference to FIG. 11. Each energy absorbing member 11 (12) has a hollow structure 70 octagonal in section and is formed of an extruded shape made of an aluminum alloy. That is, the energy absorbing member 11 (12) has, as seen in its section, an octagonal outer wall portion 71, an octagonal inner wall portion 72 similar in shape to the outer wall portion 71, and a plurality of radial wall portions 73 connecting the apexes of the two octagonal wall portions 71 and 72. An internal space octagonal in section is formed inside the inner wall portion 72, while trapezoidal inner spaces sectioned by the radial wall portions 73 are formed side by side in an annular arrangement between the outer wall portion 71 and the inner wall portion 72. The octagonal internal space in each energy absorbing member 11 (12) is an accommodation space 14 (15) in which a buckling preventing member 16 (17) can be inserted. In the example shown in FIG. 11, the energy absorbing member 11 (12) is a hollow structure 70 having an octagonal sectional shape, but the sectional shape is not limited to this. A hollow member having a suitable sectional shape other than the octagonal shape, e.g., a tube having a square sectional shape or a tube having a circular sectional shape may alternatively be used. The inner and outer wall portions can be connected to each other by a plurality of ribs in such a manner as to form a truss structure for example. The outside diameter D1 of the energy absorbing member 11 (12) is 180 to 210 mm, while the inside diameter D2 of the inner wall portion 72 is about 120 mm.

As shown in FIG. 3, buckling preventing members 16 and 17 are inserted in the octagonal spaces 14 and 15, respectively, inside the energy absorbing members 11 and 12. (The buckling preventing member is a member for preventing full buckling of the energy absorbing member, and "buckling preventing member" denotes a full buckling preventing member. In the following, however, the full buckling preventing member will be referred to simply as "buckling preventing member".) The buckling preventing members 16 and 17 limit deformation of the energy absorbing members 11 and 12 so that the energy absorbing members 11 and 12 are pressure-collapsed in the axial direction into the shape of a bellows. That is, the buckling preventing members 16 and 17 are inserted in the energy absorbing members 11 and 12 to prevent each energy absorbing member from deforming by largely bending an intermediate portion, i.e., from buckling in a full buckling manner to impair the energy absorbing member function in a shorter time period.

Each of the buckling preventing members 16 and 17 may be a cylindrical member made of an aluminum alloy. The lengths of the buckling preventing members 16 and 17 can be selected as required. The buckling preventing members 16 and 17 may be made of a material such as a fiber-reinforced plastic (FRP) in place of an aluminum alloy. That is, the buckling preventing members 16 and 17 have a flexural rigidity substantially higher than that of the energy absorbing members 11 and 12, but their rigidity may be lower than a metal product such as iron. The buckling preventing members 16 and 17 may have a flexural rigidity sufficient for limiting deformation of the energy absorbing members 11 and 12 so that the energy absorbing members 11 and 12 are pressure-collapsed into a bellows-like shape. The buckling preventing members 16 and 17 may be any solid members or hollow tubular members if they have the necessary rigidity. While the length of the buckling preventing member 16 provided in the energy absorbing member 11 shown in FIG. 3 is set shorter than the length of the buckling preventing member 17 provided in the energy absorbing member 12 (longer than the length of the energy absorbing member 12), the length of the buckling preventing member 17 may be differently selected as desired. This will be made clear below.

In the energy absorbing member 11 shown in FIG. 3, the buckling preventing member 16 disposed at an intermediate position in the longitudinal direction. If the length of the energy absorbing member 11 is increased, joint plates 14a and 14b may be added by fillet welding or some other means (the energy absorbing member 11 is partitioned into a plurality of sections by joint plates 14a and 14b). The buckling preventing member 16 provided in the energy absorbing member 11 is fixed on one of the joint plate 14a on the front end side and the joint plate 14b on the base end side, and a hole 14c is formed in the other of the joint plates 14a and 14b so as to enable passage of the buckling preventing member 16. The buckling preventing member 16 is disposed so that a suitable spacing is set between the bucking preventing member 16 and the inner wall portion 72 and between the bucking preventing member 16 and the hole 14c. When the energy absorbing member 11 is compressed, the buckling preventing member 16 moves axially relative to the energy absorbing member 11 to allow the energy absorbing member 11 to be deformed into a bellows-like shape. The gap between the buckling preventing member 16 and the inner wall portion 72 is set to such a value as to avoid hindering inward deformation of the inner wall portion 72 in deforming into a bellows-like shape. That is, a gap of about 15 mm, as represented by a dimension D3 in FIG. 11, is formed between the buckling preventing member 16 (17) and the inner wall portion 72 to provide a total clearance of 30 mm on the opposite sides of the buckling member 16 (17). A joint plate 14b side end portion of the buckling preventing member 16 may be inserted in the hole 14c of the joint plate 14c. If the energy absorbing member 11 is of a structure having an end portion of the buckling preventing member 16 inserted in the hole 14c of the joint plate 14b, the hole 14c serves as a guide for the buckling preventing member 16 to enable the buckling preventing member 16 to move smoothly in the longitudinal direction of the car body. In this structure, when an impact accompanying a collision acts on the energy absorbing member 12, the energy absorbing member 11 starts buckling. Even if the energy absorbing member 11 starts bending angularly in a full buckling manner at a center in the longitudinal direction of the energy absorbing member 11, the buckling preventing member 16 prevents the energy absorbing member 11 from deforming in this manner, thus enabling the entire energy absorbing member 11 to deform into a bellows-like shape.

Referring to FIG. 3, one buckling preventing member 17 is inserted in the space 15 inside the energy absorbing member 12 and fixed to the end plate 12a by welding. The rear end of the buckling preventing member 17 is disposed by being passed through a hole 4c formed in the end plate 4a of the underframe. When an impact acts on the energy absorbing member 12 to cause buckling of the same, the buckling preventing member 17 moves axially relative to the energy absorbing member 12 to allow the energy absorbing member 12 to be deformed into a bellows-like shape while preventing full buckling of the energy absorbing member 12.

The hole 4c in the end plate 4a of the underframe serves as a guide for the buckling preventing member 17 to enable the energy absorbing member 12 to deform smoothly into a bellows-like shape, as does the hole 14c in the joint plate 14b. It is desirable to secure a clearance as a gap between the inner wall portion 72 and the buckling preventing member 17 in the energy absorbing member 12 such as to enable the inner wall portion 72 to deform into a bellows-like shape. As described above, the buckling preventing member 17 itself does not substantially contribute to absorption of energy, but has the function of enabling the energy absorbing member 12 to deform into a bellows-like shape.

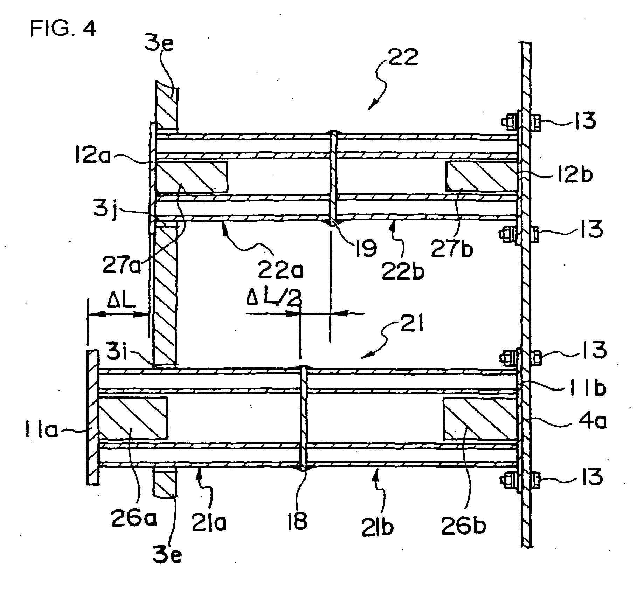

FIGS. 4 to 7 show various modified examples of combinations of buckling preventing members and joint plates. FIG. 4 shows a case (not embodying the invention) where the length of an energy absorbing member 22 is shorter than that of an energy absorbing member 21. The energy absorbing members 21 and 22 are a modified example of the energy absorbing members 11 and 12 shown in FIG. 3. In the energy absorbing members 21 and 22, buckling preventing members are respectively divided into pairs of front and rear buckling preventing members 26a and 26b, and 27a and 27b. Each of the energy absorbing members 21 and 22 is formed as one integral body by bringing the front and rear absorbing member portions 21a and 21b or 22a and 22b into abutment on a joint plate 18 or 19 and fixing them to the joint plate 18 or 19 by welding or the like. In other respects, the construction is the same as that of the energy absorbing member 11 shown in FIG. 3. Therefore the further description of the construction will not be repeated. Buckling preventing members 26a and 26b (27a and 27b) are fixed by welding to outer ends in the longitudinal direction. That is, the buckling preventing member 26a (27a) is fixed to the end plate 11a (12a) on the front end side of the energy absorbing member 21 (22) by welding and the buckling preventing member 26b (27b) is fixed to the end plate 11b (12b) on the base end side of the energy absorbing member 21 (22) by welding. The ends of the buckling preventing members 26a and 26b (27a and 27b) on the joint plate 18 (19) side are in a free state with respect to the energy absorbing member 21 (22). In this arrangement, the buckling preventing members 26a and 26b (27a and 27b) are in the fixed mounted positions with respect to the absorbing member portions 21a and 21b (22a and 22b) and do not substantially contribute to energy absorption by deformation, but prevent full buckling of the energy absorbing member 21 (22) and enable energy absorption by pressure collapse of the energy absorbing member 21 (22). That is, at the time of collision, an impact acting on the energy absorbing member 21 does not necessarily coincide with the axial direction of the energy absorbing member. If the impact direction is different from the axial direction of the energy absorbing member, a component perpendicular to the axial direction works. In this situation, there is a possibility of the energy absorbing member 21 being deformed by being bent at each of the joint to the end plate 11a and the joint to the end plate 11b. The buckling preventing members 26a and 26b are then provided on the end plates 11a and 11b to prevent the above-described bending deformation and to thereby enable the energy absorbing member to deform smoothly into a bellows-like shape in the structure.

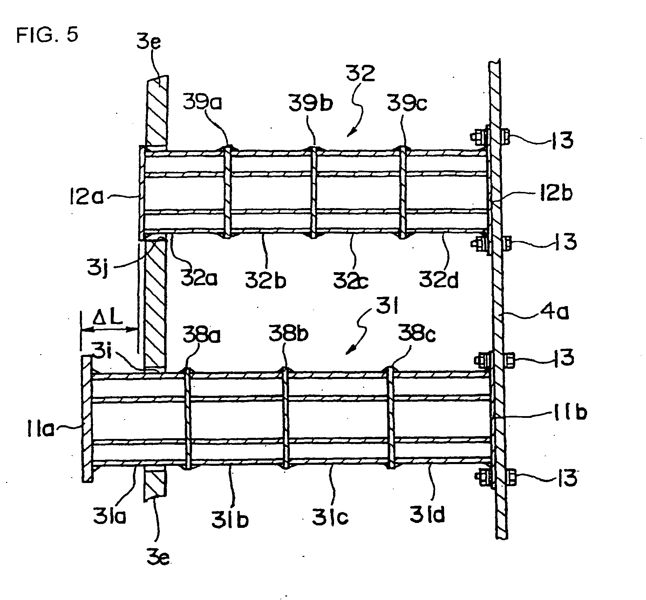

FIG. 5 shows energy absorbing members 31 and 32 (not embodying the invention) in which additional joint plates are provided. In the energy absorbing members 31 and 32, a group of joint plates 38a, 38b, and 38c, and a group of joint plates 39a, 39b, and 39c are respectively provided at positions corresponding to 25%, 50% and 75% of the entire length to divide the entire length into four equal lengths. More specifically, each of the energy absorbing members 31 and 32 is divided into four energy absorbing member portions 31a to 31d or 32a to 32d, which are brought into abutment on the joint plates 38a to 38c or 39a to 39c and their entire peripheries are fixed on the same by fillet welding externally performed thereon. The joint plates including the added ones have a thickness of about 10 mm and made of an aluminum alloy. The positions of the joint plates 39a to 39c of the adjacent energy absorbing member 32 recede relative to the positions of the joint plates 38a to 38c of the energy absorbing member 31.
That is, the length of each of the absorbing member portions 32a to 32d is shorter by ΔL/4 than that of each of the absorbing member portions 31a to 31d. It is not necessarily required that the joint plates be disposed at such positions that the energy absorbing member is divided into accurately equal parts. The joint plates may be disposed at division positions selected as desired, provided that the division positions are shifted from each other between the energy absorbing members 31 and 32. The length of each of the absorbing member portions 31a to 31d in the longitudinal direction of the car is substantially equal to the size in the width direction, so that bending deformation of each absorbing member in a single state does not occur easily in the structure. Therefore the energy absorbing member 31 does not easy buckle in a full buckling manner; it can deform smoothly into a bellows-like shape and can sufficiently absorb energy.

Thus, the positions of the joint plates 39a to 39c recede relative to the positions of the joint plates 38a to 38c, so that the maximum load can be shifted in comparison with the case where these positions coincide with each other.

Ideally speaking, the positions are shifted according to progress in pressure collapse in order of 31a → 31b → 31c → 31d.

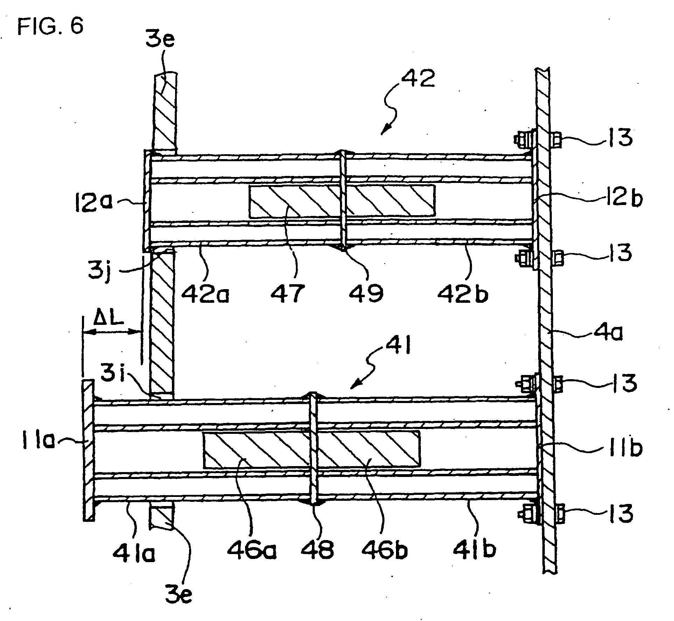

FIG. 6 is a diagram showing another example of energy absorbing members: energy absorbing members 41 and 42 using buckling preventing members 46a, 46b, 47a, and 47b and joint plates 48 and 49. In the example shown in FIG. 6, each of the joint plates 48 and 49 is provided at a positions corresponding to 50% of the entire length to divide the entire length into two equal lengths. More specifically, each of the energy absorbing members 41 and 42 is divided into two energy absorbing member portions 41a and 41b or 42a and 42b, which are brought into abutment on the joint plates 48 or 49 and their entire peripheries are fixed on the same by fillet welding externally performed thereon. The joint plates 48 and 49 have a thickness of about 10 mm and made of an aluminum alloy. Also in this example, it is not necessarily required that each of the joint plates 48 and 49 be disposed at such a position that the energy absorbing member is divided into accurately equal two parts. The joint plates may be disposed at a position such as to divide the energy absorbing member into two parts approximately equal to each other, and it is not necessary to adhere to any position section method.

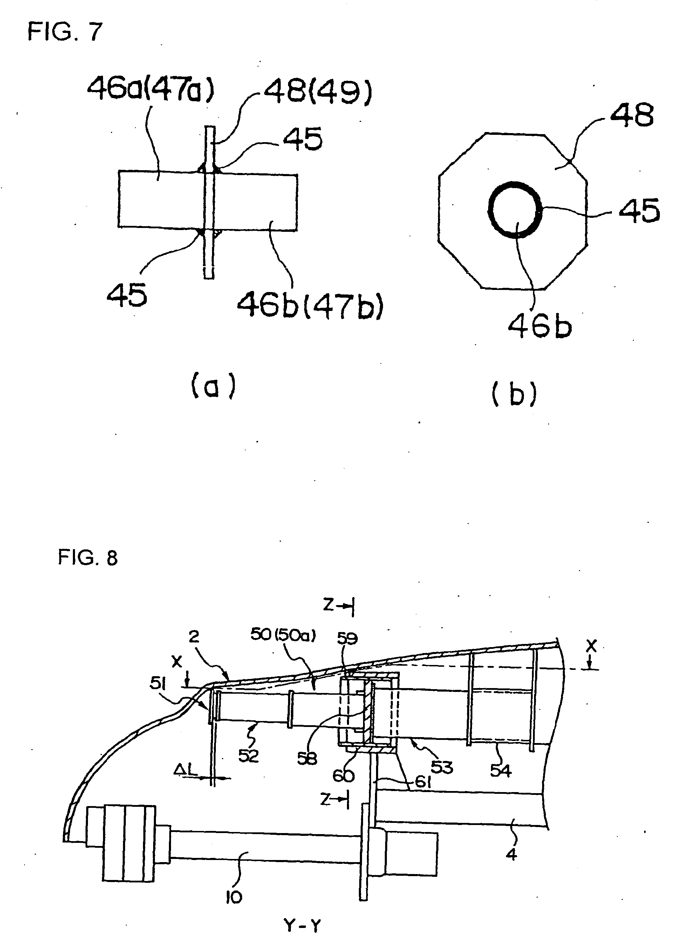

FIGS. 7(a) and 7(b) show an example of a combination of buckling preventing members 46a and 46b and a joint plate 48 used in an energy absorbing member. FIG. 7(b) is a right side view of FIG. 7(a). In the energy absorbing members 41 and 42 shown in FIG. 6, front and rear energy absorbing portions 41a and 41b and 42a and 42b are brought into abutment on the joint plate 48 and 49 and their entire peripheries are fixed on the same by fillet welding 45 externally performed thereon. As shown in FIGS. 7(a) and 7(b), the buckling preventing members 46a and 46b (47a and 47b) are fixed on the joint plate 48 (49) at an intermediate position by fillet welding 45 externally performed thereon. Thus, the buckling preventing members 46a, 46b, 47a, and 47b and the joint plates 48 and 49 are provided in units to facilitate handling in storage, transport, assembly and so on. Each of the buckling preventing members 46a, 46b, 47a, and 47b has been shown as a cylinder as a whole, and each of the joint plates 48 and 49 has been shown as an octagonal plate. Each buckling preventing plate and each joint plate, however, are not limited to the described types. Each of the buckling preventing members 46a, 46b, 47a, and 47b may have the shape of a rod or a tube circular or rectangular in section, and each of the joint plates 48 and 49 may have the shape of a circular or rectangular plate or any other shape.

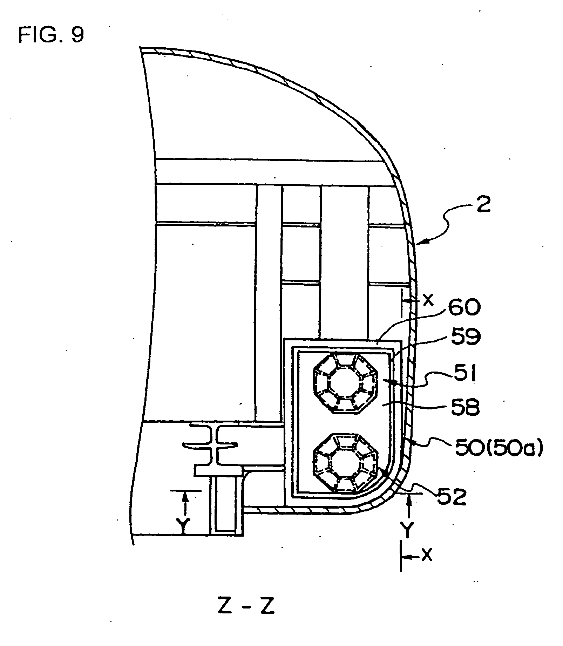

An impact energy absorbing device according to the present invention and a front-end car which is a railway vehicle using the impact energy absorbing device will be described as a second embodiment of the present invention with reference to FIGS. 8 to 10.

A front-end portion 2 of the front-end car has a curved surface convex in the frontward direction. An impact energy absorbing device is disposed at the rear end of the front-end car and at the front end of an intermediate car, respectively. An impact energy absorbing device 50 which absorbs part of impact energy generated at the time of collision with an obstacle or the like is disposed in the front end portion 2. A coupler 10 is provided at the foremost end of the front end portion 2 of the front-end car.

As shown in FIGS. 8 to 10, impact energy absorbing devices 50 (50a) are mounted in a front-end region, i.e., a predetermined region in the longitudinal direction of the car body in the front-end car, while being spaced apart from each other in the width direction of the car body. More specifically, impact energy absorbing devices 50a and 50b identical in structure to each other are symmetrically disposed at left and right sides of the car body in the width direction. In the figures, only the device on one side is shown, illustration of the other side is omitted. Each of the impact energy absorbing devices 50a and 50b on the opposite sides is constructed in upper and lower two stages. In the upper and lower stages, a first energy absorbing member 51 and a second energy absorbing member 52 which absorb impact energy by pressure-collapsing at the time of collision are respectively disposed at the front end side. Each of the first energy absorbing member 51 and the second energy absorbing member 52 is a structural body similar to that in the first embodiment, i.e., a tubular structural body having a hollow structure octagonal in section as shown in FIG. 11. Each energy absorbing member is disposed so that the axis of the tube is parallel to the car longitudinal direction (front-rear direction and traveling direction). Thus, the impact energy absorbing devices 50a and 50b on the opposite sides as a whole have a total of four energy absorbing members: the first and second energy absorbing members 51 and 52 extending toward the car front end.

The first energy absorbing member 51 and the second energy absorbing member 52 constructed in upper and lower two stages are mounted on a common supporting plate 58 at their one end in the direction of pressure collapse, i.e., the end closer to a center in the car longitudinal direction. The two energy absorbing members 51 and 52 are connected to one common third energy absorbing member 53 at the rear end of the supporting plate 58 (an end closer to the center in the car longitudinal direction). A rear portion (an end closer to the center in the car longitudinal direction) of the third energy absorbing member 53 is connected to the underframe 4 through a car body structural frame 54. In the first to third energy absorbing members 51 to 53, the sectional area of the absorbing member becomes larger along the rearward direction (toward the center in the car longitudinal direction).

The common supporting plate 58 is fixed on a guide tube 59 having a peripheral edge generally in the form of a rectangular tube as a whole. An outer peripheral surface 59a of the guide tube 59 is slidably fitted to an inner surface 60a of a guide tube box 60 mounted on the car body. At the time of collision, the first and second energy absorbing members 51 and 52 first deform and pressure-collapse to absorb a predetermined amount of energy, the third energy absorbing member 53 thereafter starts deforming and moves toward the rear of the car, with the guide tube 59 guided inside the guide tube box 60 together with the common supporting plate 58. If the entire energy produced by collision is absorbed by pressure collapse of the first and second energy absorbing members, the third energy absorbing member does not deform. Since the first energy absorbing member 51 and the second energy absorbing member 52 are guided by the inner surface 60a of the guide tube box 60, they can perform the impact energy absorbing function through the entire length without buckling at an intermediate portion (a portion at the guide tube box 60). The guide tube 59 and the guide tube box 60 constitute a slide guide. The guide tube box 60 is provided at the front end of the underframe 4. A driver's compartment exists at the rear of the guide tube box 60. The front end of the driver's compartment is covered with a flying object shielding plate 61. The guide tube box 60 can be said to be an opening in the flying object shielding plate 61. The first to third energy absorbing members 51, 52, and 53 can continuously perform the impact energy absorbing function without bending at an intermediate portion in a full buckling manner.

As shown in FIG. 10, the collision direction front end positions of the first energy absorbing member 51 and the second energy absorbing member 52 are shifted to a plurality of positions, as in the case of the impact energy absorbing device disposed at the car ends. That is, the first and second energy absorbing members 51 and 52 slightly differ in length in the collision direction. In the state of being supported on the common supporting plate 58, the first energy absorbing member 51 has its front end positioned slightly shifted forward by ΔL (e.g., about 100 mm) relative to the front end position of the second energy absorbing member 52. At the time of collision of the front-end car, the first energy absorbing member 51 starts pressure-collapsing earlier than the second energy absorbing member 52 due to the difference (ΔL) between the front end positions. By this slight difference in collapse start time, the peak load is dispersed. In this way, the collapse peak load through the energy absorbing members 51 to 52 are reduced, thereby reducing loads on the car body, passengers and so on. It is apparent that the structure of the energy absorbing members 51 to 54 may be formed on the basis of the structure of the energy absorbing members shown in FIGS. 1 to 7.

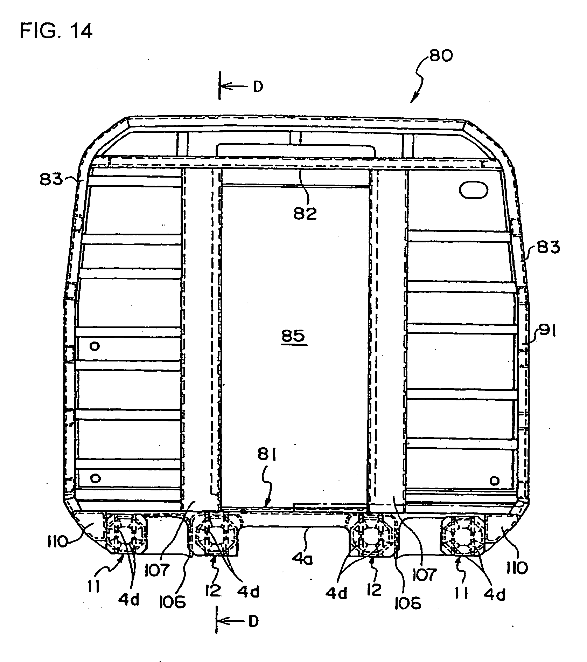

A railway vehicle will be described with reference to FIGS. 14 to 18. The present invention may be applied to this vehicle. In this structure, when a railway vehicle collides against an obstacle, car end side beams 110 first collide against the obstacle and energy absorbing members collide subsequently. The car end side beams 110 are first pressure-collapsed thereby to reduce the maximum load produced in the railway vehicle.

A structure specific to Figs. 14-18 in comparison with the first embodiment of the invention is a structure in which a car end structure 80 is provided at an end of a railway vehicle in the longitudinal direction. Car end side beams 110 constituting the car end structure 80 are constructed so as to be jutted out relative to the energy absorbing members 11 and 12. That is, while the body of a railway vehicle is ordinarily constituted by an underframe, two side structures, a roof structure and two end structures, the car body in Figs. 14-18 has car end structures 80 in place of the conventional end structures. The car end structures 80 are detachably mounted on opposite ends of a car body 201 in the car longitudinal direction. The car body 201 is constituted by an underframe, two side structures and a roof structure. The entire construction of the car body 201 is generally tubular. The car end structure 80 includes a floor structure 81 forming its lower portion, side walls 83 forming side portions on opposite sides in the car width direction, and a ceiling 82 forming its upper portion. The floor structure 81, the side walls 83 and the ceiling 82 are constructed integrally with each other.

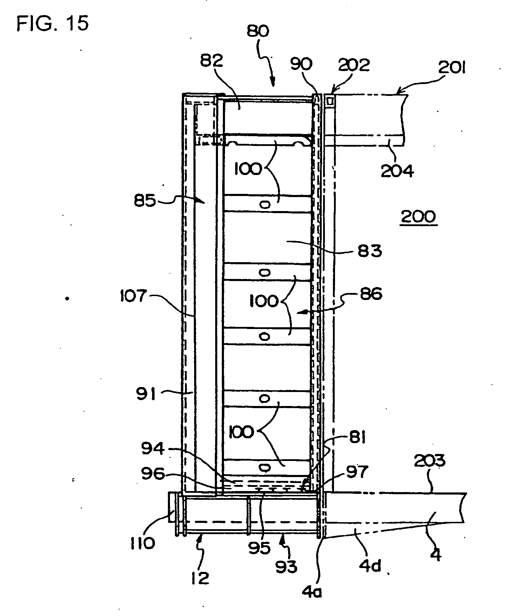

The length of the car end structure 80 in the car longitudinal direction is sufficiently smaller than the length of the car body 201. As shown in FIGS. 14 and 15, the car end structure 80 is a collapsible structure added to an end 202 of a railway vehicle 200 provided as an intermediate car. The car end structure 80 is formed as a short-trunk structure sufficiently short in comparison with the car length of the railway vehicle 200. The car end structure 80 is formed so that its sectional shape conforms basically to the sectional shape (outermost shape) of the car body 201. Strength members of the floor structure 81 are disposed at the same position in the height direction as an underframe upper surface 203 of the car body 201. Also, the ceiling 82 of the car end structure 80 is formed at the same position in the height direction as a ceiling 204 of the car body 201. The side walls 83 of the car end structure 80 are formed so that their positions correspond to the side structures of the car body 201. The side walls 83 have, on the car body side, a contour wider at a lower position in conformity with the sectional configuration of the railway vehicle 200.

In the car end structure 80, a passage 86 open to the car body 201 through a passage opening 85 is provided. The car end structure 80 has the passage opening 85 for passage to an adjacent car provided on the car end side and is fully open at the opposite side, i.e., the car body 201 side. The passage 86 and the internal space of the car end structure 80 are surrounded by the ceiling 82 and the side walls 83. The car end structure 80 has two frames 90 and 91 (body frames) provided at the opposite ends in the car front-rear direction. Each of the frames 90 and 91 is formed in the form of a closed ring as a whole by bending a tubular member square or rectangular in section or by connecting separate frame members. The frames 90 and 91 are mounted so as to extend along the periphery of the body at the car body 201 side and the car end side of the car end structure 80. The floor structure 81, the ceiling 82 and the side walls 83 are formed between the two frames 90 and 91. The car end structure 80 is strongly coupled to the car body 201. More specifically, fastening bolts are set by being passed through a plurality of bolt holes (not shown) provided on the frame 90 and the end frame 202 of the car body 201 are connected to each other by the bolts and nuts provided on the car body side. A load (weight) and tensile force from the car body structure 80 are received by the bolts and nuts, while a load in the compression direction is transmitted through the surfaces of the frame 90 and the end frame 202.

The ceiling 82 and the side walls 83 are constituted by a plurality of frame members 100, such as side frame members and rafter members connecting the frames 90 and 91, and outer plate members provided outside the frame members 100. The frame members 100 have openings for adjusting the strength of the frame members in the car longitudinal direction with respect to pressure collapse of the car end structure 80 at the time of collision, and are thus constructed to minimize damage to the car body 201. The frame members 100 connecting the two frames 90 and 91 at positions spaced apart in a body peripheral direction are provided as the body reinforcing ribs. However, these ribs have a characteristics to outwardly buckle at the time of pressure collapse owing to the opening formed therein in order to avoid the effect which might otherwise be made on the interior of the car end structure 80. The openings in the frame members 100 are also effective in reducing the weight of the car end structure 80.

The floor structure 81 of the car end structure 80 is constituted by car end side beams 110 disposed at opposite sides in the car width direction, reinforcing beams 106 provided inside the car end side beams 110, and a floor reinforcing member 96 provided on upper surfaces of the car end side beams 110 and the reinforcing beams 106. The floor reinforcing member 96 has a plurality of reinforcing ribs 97 provided on its upper side. The reinforcing ribs 97 are T-shaped in section. A floor carpet 94 is provided on upper surfaces of the reinforcing ribs 97. The reinforcing ribs 97 are disposed parallel to each other, with its longitudinal direction set in correspondence with the car width direction. The floor reinforcing member 96 is provided on upper surfaces 95 of the car end side beams 110. The reinforcing beams 106 have the shape of inverted J as seen in section and are disposed so as to extend along the upper surfaces of and one-side surface of the energy absorbing members 12.

The floor structure 81 and a lower structure 93 in the car end structure 80 correspond to the underframe 4 of the car body 201. In a region at the abutment end of the underframe 4, reinforcing members (reinforcing beams) 4d are provided in a region extending along the lower side and having an elongated generally triangular region as seen in the side view (FIG. 15). The reinforcing members 4d are provided for the purpose of transmitting an impact from the car end structure 80 to the end of the underframe 4. More specifically, the reinforcing members 4d are constructed in such a manner that a plurality of reinforcing frame members having such a structure as to extending straight along an oblique line (forming a triangular shape) as seen in the car width direction are joined to a side surface of the end plate 4a facing in the car longitudinal direction and a lower surface of the underframe 4. The reinforcing frame members may have a shape other than the triangular shape and may be formed so as to be generally L-shaped. The reinforcing frame members transmit an impact at the time of collision from the energy absorbing members 11 and 12 and the car end side beams 110 to the underframe 4 through the end plate 4a. In other words, a structure which supports a lower portion of the end plate 4a from the car body side is formed by the reinforcing frame members. As shown in FIG. 14, the portion of the end plate 4a corresponding to a coupler setting position is cut so as to form the shape of inverted U. Ends of the energy absorbing members 11 and 12 and the car end side beams 110 on the car body side are joined to a joint plate 99 having generally the same shape as that of the end plate 4a. In the state where the car end structure 80 and the car body 201 are joined to each other, the joint plate 99 and the end plate 4a are superposed on each other.

The energy absorbing members 11 are placed so that their car-end-side ends are jutted out relative to the car-end-side ends of the energy absorbing members 12, and the car end side beams 110 are placed that their car-end-side ends are jutted out relative to the car-end-side ends of the energy absorbing members 11. The car end side beams 110 are disposed in correspondence with the side beams constituting the underframe 4, and the sectional shapes of the car end side beams 110 are similar to those of the side beams of the underframe 4. The car end side beams 110 are specified with respect to its plate thickness and so on so as to have a strength factoring in the collapse deformation of the car end structure 80. The car end side beams 110 are disposed in the car end structure 80 at the opposite ends in the car width direction. The energy absorbing members 11 are disposed inside the car end side beams 110, and the energy absorbing members 12 are disposed inside the energy absorbing members 11.

The passage opening 85 of the car end structure 80 is formed at a position below the ceiling 82 with pillar members 107 provided on opposite sides of the passage opening 85 in the car width direction. Each pillar member 107 is formed of a hollow shape square or rectangular in section. For example, each pillar member 107 is formed of a hollow extruded shape made of an aluminum alloy. A plurality of lateral frame members disposed in a horizontal direction are provided between the pillar members 107 and portions of the frame 91 at opposite sides in the car width direction. An outer plate is provided on outer surfaces of the lateral frame members between the pillar members 107 and the frame 91. A train crew chamber (including an auxiliary driver's chamber), an equipment installation chamber, and a through path are formed in the car end structure 80. The car end side beams 110 and the energy absorbing members 11 and 12 are disposed on opposite ends of the car body 201 in the width direction, with the end plate 4a interposed therebetween.

In this structure, characteristics of the energy absorbing members 11 and 12 are utilized such that the amount of reduction in load when the load decreases after the peak load is small (the reduced load referred to as after-buckling average load). That is, the level of after-buckling average load of the energy absorbing members 11 and 12 is high. Therefore, if the load acting on the car end side beams 110 is added to the post-buckling average load, the entire load is excessively increased. For this reason, the car end side beams 110 are pressure-collapsed earlier to reduce the imposed load. The energy absorbing members 11 and 12 are then pressure-collapsed. The overall maximum load (peak load) can be reduced in this way. Thus, pressure collapse of the energy absorbing members 11 and 12 are caused after pressure collapse of members other than the energy absorbing members 11 and 12, i.e., the car end side beams 110, thereby limiting the peak load at the time of pressure collapse of the car end structure 80.

The times at which the loads through the car end side means 110 and the energy absorbing members 11 and 12 are maximized are successively shifted and this shifting is performed in such a way that pressure collapse of the car end side beams 110 is caused before that of the energy absorbing members 11 and 12, thus ensuring the desired amount of energy absorption while limiting the maximum load on the impact load receiving side.

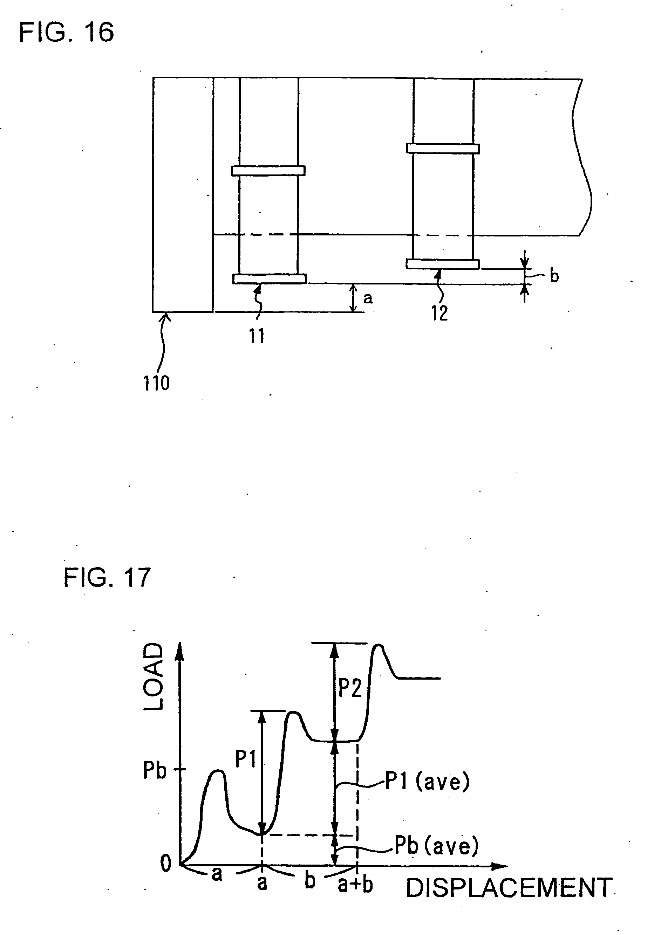

The functions and advantages of the structure of Figs. 14 to 18 will be described with reference to the graphs of FIGS. 16 to 21. Let the maximum loads bearable on the energy absorbing members 11 and 12 when the energy absorbing members 11 and 12 are respectively pressure-collapsed be P1 and P2, and the loads reduced after the generation of the peak loads, i.e., post-buckling average pressure collapse loads, be P1 (ave) and P2 (ave), respectively. Let the maximum load when the car end side beams 110 are pressure-collapsed be Pb, and the post-buckling average pressure collapse load after the peak load Pb has appeared be Pb (ave).

The pressure-collapse peak can be shifted by shifting in the longitudinal direction the positions at which the joint plates of the energy absorbing members 11 and 12 are disposed (see, for example, FIGS. 4, 6 and the like).

Referring to FIG. 16, it is assumed that the car end side beams 110 and the energy absorbing members 11 and 12 are placed so that the car end side beams 110 are jutted out on the end side by size a relative to the energy absorbing members 11, and the energy absorbing members 11 are jutted out on the end side by size b (corresponding to ΔL in the first embodiment) relative to the energy absorbing members 12. FIG. 17 shows changes in load with respect to the displacement in the impact energy absorbing device having the component in this placement.

The car end side beams 110 first start pressure collapsing at the time of vehicle collision. When the car end side beams 110 are pressure-collapsed, the peak load Pb is sufficiently large. However, the absorbable load after the peak load Pb is small. The energy absorbing members 11 and 12 are ordinarily designed so that the amount of reduction in absorbable load after a peak load is reduced. In contrast, the load absorbable by the car end side beams 110 after the peak load Pb is considerably reduced since the car side beams 110 are not energy absorbing members.

Referring to FIG. 17, at a stage at which the reduction to the post-buckling average pressure collapse load Pb(ave) absorbable by the car end side beams 110 is seen, the energy absorbing members 11 and 12 start pressure collapsing stepwise in jutting-out order. The post-buckling average pressure collapse load Pb(ave) of the car side beams 110 is sufficiently smaller than the post-buckling average pressure collapse load P1(ave) or P2(ave) of the energy absorbing members 11 or 12. Therefore, even if the maximum pressure collapse load P1 and P2 corresponding to the respective pressure collapses of the energy absorbing members 11 and 12 are successively added to the post-buckling average pressure collapse load Pb(ave), the maximum load through the entire system can be limited to [Pb(ave) + P1(ave) + P2].

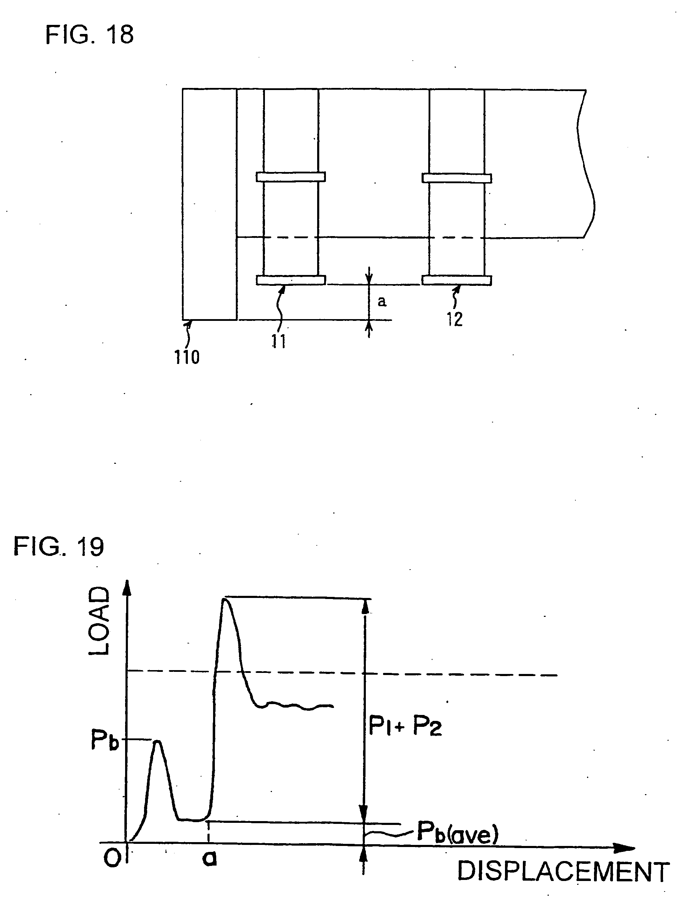

A comparative example 1 for comparison with this embodiment will be described. FIG. 18 shows the placement and FIG. 19 shows changes in absorbed load.

Referring to FIG. 18, the positions of the front ends of the energy absorbing members 11 and 12 coincide with each other and the front ends of the car end side beams 110 are jutted by size a relative to the front ends of the energy absorbing members 11 and 12.

Referring to FIG. 19, when, after the generation of the maximum load Pb as the load received by the car end side beams 110, load is reduced to the post-buckling average pressure collapse load Pb(ave), and when the amount of displacement corresponding to the size a is exceeded, the energy absorbing members 11 and 12 start deforming simultaneously. The maximum load through the entire system at this time is [Pb(ave) + P1 + P2]. The maximum load thereafter decreases to the post-buckling average pressure collapse load [Pb(ave) + P1(ave) + P2(ave)]. The maximum load is larger by [P1 - P1(ave)] than the maximum load [Pb(ave) + P1(ave) + P2] through the entire system in the case described above with reference to FIG. 17.

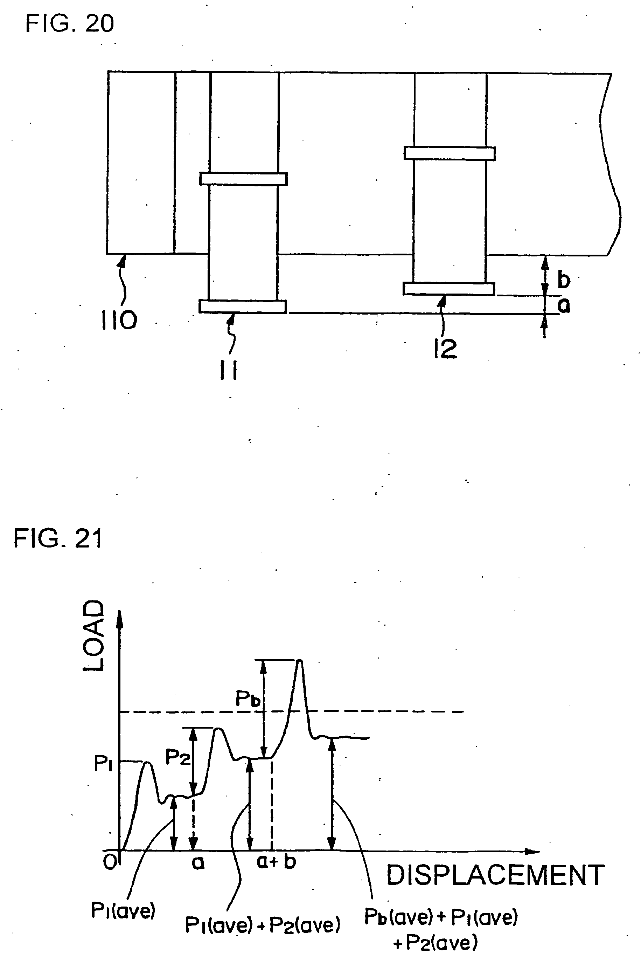

Another comparative example 2 will be described. FIG. 20 shows the placement and FIG. 21 shows changes in absorbed load.

Referring to FIG. 20, the front ends of the energy absorbing members 11 are jutted by size a relative to the front ends of the energy absorbing members 12, and the front ends of the energy absorbing members 12 are jutted by size b relative to the front ends of the car end side beams 110.

Referring to FIG. 21, when, after the generation of the maximum load P1 through the energy absorbing members 11, the post-buckling average pressure collapse load is reduced to P1(ave), and when the amount of displacement corresponding to the size a is exceeded, the energy absorbing members 12 start pressure collapsing. When after addition of the maximum load P2 of the energy absorbing member 12 the added amount is reduced to the post-buckling average pressure collapse load P2(ave), and when the amount of displacement corresponding to size (a + b) is exceeded, the car end side beams 110 start pressure collapsing. The maximum load through the entire system at this time is [Pb + P1(ave) + P2(ave)]. The maximum load thereafter decreases to the post-buckling average pressure collapse load [Pb(ave) + P1(ave) + P2(ave)]. The maximum load is larger by [Pb - Pb(ave) + P2(ave) - P2] than the maximum load [Pb(ave) + P1(ave) + P2] through the entire system in the case described with reference to FIG. 17.

Thus, according to the placement shown in FIG. 16, pressure collapse of the car end side beams 110 is caused before that of the energy absorbing members 11 and 12 to reduce the maximum load at the time of collision.

The car end structure 80 is provided as a unit. The arrangement in which the front ends of the energy absorbing members 11 and 12 and the car end side beams 110 are relatively shifted ensures a reduction in maximum load in comparison with the case where the front ends are not relatively shifted. With this arrangement, a load imposed on the car body 201 at the time of collision can also be reduced to limit damage to the car body 201. Alternatively, for example, the strength members of the car body 201 are reduced in thickness to achieve a reduction in weight, thus improving the degree of design freedom. The effect of avoiding or sufficiently limiting damage to the car body 201 even in a case where the car end structure 80 becomes unusable after undergoing pressure collapse can be expected. The car body 201 can be reused immediately or after undergoing only slight repairs, and can be restored as a car by adding a new car end structure 80.

## Claims

1. A railway vehicle comprising an impact energy absorbing device having at least one energy absorbing member (11, 41, 42) which pressure-collapses at the time of collision to absorb impact energy,
wherein the energy absorbing member is a tubular member in which a space extending in a longitudinal direction is formed; and
a buckling preventing member (16, 46, 47) for preventing full buckling of the energy absorbing member is disposed in the space,
**characterised in that** the tubular member (11, 41, 42) is divided into front and rear portions (41a, 41b, 42a, 42b)in the longitudinal direction, the divided front and rear portions of the tubular member being fixed in abutment on a joint plate (14a, 14b, 48, 49); and
the buckling preventing member (16, 46, 47) is fixed to the joint plate (14a, 14b, 48, 49).

2. The railway vehicle according to claim 1, wherein the buckling preventing member (16, 46, 47) can be relatively moved in the space during energy absorbing operation.

3. The railway vehicle according to claim 1 or 2,
wherein the energy absorbing member (11, 41, 42) is disposed in an end portion (2) of a front-end vehicle or a trailing-end vehicle corresponding to the railway vehicle or in each of end regions close to each other in a train, with its axis aligned with the longitudinal direction of the railway vehicle.

4. The railway vehicle according to any one of claims 1 to 3,
wherein the body of the railway vehicle is constituted by a car body and a car end structure (3a, 3b, 80) disposed on a car end portion of the car body;
the car end structure (3a, 3b, 80) is pressure collapsible at the time of collision and detachably attached to the car end portion of the car body; and
the energy absorbing members (11, 41, 42) are disposed below a floor portion (3h) of the car end structure (3a, 3b, 80).

5. The railway vehicle according to claim 4, wherein hollow car end side beams (110) capable of starting pressure collapsing in advance of the energy absorbing members (11, 41, 42) at the time of collision to absorb part of the impact energy are further disposed below the floor portion (3h) of the car end structure (80).

6. The railway vehicle according to claim 4 or 5,
wherein the car end structure (80) has two parallel body frames (90, 91) spaced apart from each other in the longitudinal direction of the railway vehicle; and
a plurality of body reinforcing ribs (100) are disposed between the two body frames (90, 91), the body reinforcing ribs (100) connecting the two body frames at positions spaced apart in a body peripheral direction, the body reinforcing ribs (100) having a characteristic to outwardly buckle at the time of pressure collapse.

7. The railway vehicle according to claim 4,
wherein the floor portion (81) of the car end structure (80) has a plurality of parallel floor reinforcing ribs (97) spaced apart from each other in the longitudinal direction of the railway vehicle; and
the floor portion (81) can buckle finely between the floor reinforcing ribs (97) at the time of pressure collapse.

## Patentansprüche

1. Eisenbahnfahrzeug, das eine Stoßenergie absorbierende Vorrichtung mit mindestens einem energieabsorbierenden Element (11, 41, 42) aufweist, das bei einer Kollision unter Druck kollabiert und dabei Stoßenergie absorbiert,
wobei das energieabsorbierende Element ein rohrartiges Element ist, in dem ein in Längsrichtung verlaufender Raum ausgebildet ist, und
in dem Raum ein knickverhinderndes Element (16, 46, 47) zum Verhindern eines völligen Einknickens des enegieabsorbierenden Elements angeordnet ist,
**dadurch gekennzeichnet, dass** das rohrartige Element (11, 41, 42) in Längsrichtung in einen vorderen und einen hinteren Abschnitt (41a, 41b, 42a, 42b) unterteilt ist, wobei der geteilte vordere und hintere Abschnitt des rohrartigen Elements anstoßend auf einer Verbindungsplatte (14a, 14b, 48, 49) befestigt sind, und
das knickverhindernde Element (16, 46, 47) an der Verbindungsplatte (14a, 14b, 48, 49) befestigt ist.

2. Eisenbahnfahrzeug nach Anspruch 1, wobei das knickverhindernde Element (16, 46, 47) während des energieabsorbierenden Vorgangs in dem Raum relativ beweglich ist.

3. Eisenbahnfahrzeug nach Anspruch 1 oder 2,
wobei das energieabsorbierende Element (11, 41, 42) in einem Endabschnitt (2) eines dem Eisenbahnfahrzeug entsprechenden vordersten oder hintersten Fahrzeug oder in den jeweiligen in einem Zug einander benachbarten Endbereichen angeordnet ist, wobei seine Achse auf die Längsrichtung des Eisenbahnfahrzeugs ausgerichtet ist.

4. Eisenbahnfahrzeug nach einem der Ansprüche 1 bis 3,
wobei der Aufbau des Eisenbahnfahrzeugs von einem Wagenaufbau und einer Wagenendstruktur (3a, 3b, 80), die an einem Wagenendabschnitt des Wagenaufbaus angeordnet ist, gebildet ist,
die Wagenendstruktur (3a, 3b, 80) bei Kollision unter Druck kollabierbar ist und am Wagenendabschnitt des Wagenaufbaus abnehmbar angebracht ist, und
die energieabsorbierenden Elemente (11, 41, 42) unter einem Bodenabschnitt (3b) der Wagenendstruktur (3a, 3b, 80) angeordnet sind.

5. Eisenbahnfahrzeug nach Anspruch 4, wobei unter dem Bodenabschnitt (3b) der Wagenendstruktur (80) hohle Wagenend-Seitenträger (110) angeordnet sind, die bei Kollision vor den energieabsorbierenden Elementen (11, 41, 42) beginnen können, unter Druck zu kollabieren, um einen Teil der Stoßenergie zu absorbieren.

6. Eisenbahnfahrzeug nach Anspruch 4 oder 5,
wobei die Wagenendstruktur (80) zwei parallele Aufbaurahmen (90, 91) aufweist, die in Längsrichtung des Eisenbahnfahrzeugs einen Abstand voneinander aufweisen, und
zwischen den beiden Aufbaurahmen (90, 91) mehrere Aufbauverstärkungsrippen (100) angeordnet sind, die die beiden Aufbaurahmen an Orten verbinden, die in Aufbauumfangsrichtung einen Abstand voneinander aufweisen, wobei die Aufbauverstärkungsrippen (100) die Eigenschaft aufweisen, beim Kollabieren unter Druck nach außen zu knicken.

7. Eisenbahnfahrzeug nach Anspruch 4, wobei der Bodenabschnitt (81) der Wagenendstruktur (80) mehrere parallele Bodenverstärkungsrippen (97) aufweist, die in Längsrichtung des Eisenbahnfahrzeugs einen Abstand voneinander aufweisen, und
der Bodenabschnitt (81) beim Kollabieren unter Druck zwischen den Bodenverstärkungsrippen (97) fein knicken kann.

## Revendications

1. Véhicule ferroviaire comportant un dispositif d'absorption d'énergie de choc ayant au moins un éléments d'absorption d'énergie (11, 41, 42) lequel s'écrase par compression au moment de la collision pour absorber l'énergie de choc,
dans lequel l'élément d'absorption d'énergie et un élément tubulaire dans lequel un espace s'étendant dans une direction longitudinale est formé, et
un élément de prévention du flambage (16, 46, 47) pour empêcher un flambage complet de l'élément d'absorption d'énergie est disposé dans l'espace,
**caractérisé en ce que** l'élément tubulaire (11, 41, 42) est divisé en parties avant et arrière (41a, 41b, 42a, 42b) dans la direction longitudinale, les parties avant et arrière divisées de l'élément tubulaire étant fixées en butée contre une plaque de jonction (14a, 14b, 48, 49) , et
l'élément de prévention du flambage (16, 46, 47) est fixé à la plaque de jonction (14a, 14b, 48, 49).

2. Véhicule ferroviaire selon la revendication 1, dans lequel l'élément de prévention du flambage (16, 46, 47) peut être déplacé de manière relative dans l'espace pendant l'opération d'absorption d'énergie.

3. Véhicule ferroviaire selon la revendication 1 ou 2, dans lequel l'élément d'absorption d'énergie (11, 41, 42) est disposé dans une partie d'extrémité (2) d'un véhicule de tête ou d'un véhicule de queue correspondant au véhicule ferroviaire ou dans chacune des régions d'extrémité proches les unes des autres dans un train, ayant son axe aligné avec la direction longitudinale du véhicule ferroviaire.

4. Véhicule ferroviaire selon l'une quelconque des revendications 1 à 3,
dans lequel le corps du véhicule ferroviaire est constitué par un corps de voiture et une structure d'extrémité de voiture (3a, 3b, 80) disposée sur une partie d'extrémité de voiture du corps de voiture,
la structure d'extrémité de voiture (3a, 3b, 80) peut chuter en pression au moment de la collision et est fixée de manière amovible à la partie d'extrémité de voiture du corps de voiture, et
les éléments d'absorption d'énergie (11, 41, 42) sont disposés au-dessous d'une partie de plancher (3h) de la structure d'extrémité de voiture (3a, 3b, 80).

5. Véhicule ferroviaire selon la revendication 4, dans lequel des poutres latérales d'extrémité de voiture creuses (110) pouvant initier la chute de pression avant les éléments d'absorption d'énergie (11, 41, 42) au moment de la collision pour absorber une partie de l'énergie de choc sont en outre disposées au-dessous de la partie de plancher (3h) de la structure d'extrémité de voiture (80).

6. Véhicule ferroviaire selon la revendication 4 ou 5,
dans lequel la structure d'extrémité de voiture (80) a deux châssis de corps parallèles (90, 91) espacés l'un de l'autre dans la direction longitudinale du véhicule ferroviaire, et
une pluralité de nervures de renfort de corps (100) sont disposées entre les deux châssis de corps (90,91), les nervures de renfort de corps (100) reliant les deux châssis de corps à des positions espacées dans une direction périphérique de corps, les nervures de renfort de corps (100) ayant une caractéristique pour flamber vers l'extérieur au moment de l'écrasement par compression.

7. Véhicule ferroviaire selon la revendication 4,
dans lequel la partie de plancher (81) de la structure d'extrémité de voiture (80) a une pluralité de nervures de renfort de plancher parallèles (97) espacées les unes des autres dans la direction longitudinale du véhicule ferroviaire, et
la partie de plancher (81) peut être soumise à un flambage précis entre les nervures de renfort de plancher (97) au moment de l'écrasement par compression.
